(19) Europäisches Patentamt / European Patent Office / Office européen des brevets

(11) **EP 2 335 250 B1**

(12) **FASCICULE DE BREVET EUROPEEN**

(45) Date de publication et mention de la délivrance du brevet:
**01.02.2012 Bulletin 2012/05**

(51) Int Cl.:
*G21C 21/02* *(2006.01)*      *G21C 3/07* *(2006.01)*
*G21C 3/20* *(2006.01)*

(21) Numéro de dépôt: **09740177.2**

(22) Date de dépôt: **18.09.2009**

(86) Numéro de dépôt international:
**PCT/FR2009/001105**

(87) Numéro de publication internationale:
**WO 2010/031925 (25.03.2010 Gazette 2010/12)**

(54) **GAINE DE COMBUSTIBLE NUCLEAIRE A HAUTE CONDUCTIVITE THERMIQUE ET SON PROCEDE DE FABRICATION**

KERNBRENNSTOFFMANTELUNG MIT HOHER WÄRMELEITFÄHIGKEIT UND PROZESS ZU IHRER HERSTELLUNG

NUCLEAR FUEL CLADDING OF HIGH THERMAL CONDUCTIVITY AND ITS PROCESS OF MANUFACTURE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **18.09.2008 FR 0805127**

(43) Date de publication de la demande:
**22.06.2011 Bulletin 2011/25**

(73) Titulaires:
• **Commissariat à l'Énergie Atomique et aux Énergies Alternatives**
**75015 Paris (FR)**
• **Le Centre National de la Recherche Scientifique (CNRS)**
**75794 Paris Cedex 16 (FR)**
Etats contractants désignés:
**FR**

(72) Inventeurs:
• **CABRERO, Julien**
**F-33000 Bordeaux (FR)**
• **PAILLER, René**
**F-33610 Cestas (FR)**
• **AUDUBERT, Fabienne**
**F-84160 Cadenet (FR)**

(74) Mandataire: **Dennemeyer & Associates S.A.**
**55, rue des Bruyères**
**1274 Howald (LU)**

(56) Documents cités:
**WO-A-2007/017503**      **US-A1- 2006 039 524**
**US-A1- 2007 189 952**

EP 2 335 250 B1

**Description**

**DOMAINE TECHNIQUE**

La présente invention se situe de façon générale dans le domaine du combustible nucléaire, et concerne en particulier une gaine de combustible nucléaire destinée aux réacteurs nucléaires « hautes températures » refroidis à l'hélium ainsi que son procédé de fabrication.

**ETAT DE LA TECHNIQUE**

Parmi les réacteurs nucléaires du futur figure le Réacteur à Neutrons Rapides (RNR) utilisant l'hélium comme caloporteur gaz (dit réacteur « RNR-He »). Ce réacteur est dit « hautes températures » car la température de son coeur en fonctionnement est généralement comprise entre 800 °C et 1200 °C.

Comme décrit dans la demande de brevet EP 1 913 600, une gaine de combustible nucléaire mise en oeuvre dans un tel réacteur peut se présenter sous la forme d'une plaque, d'un cylindre, d'une sphère ou d'un réseau d'alvéoles.

Soumises aux conditions de température précitées, cette gaine nécessite l'utilisation de matériaux réfractaires à haut point de fusion (afin d'assurer une stabilité thermomécanique suffisante pour maintenir le combustible au sein de la gaine) et doit présenter une conductivité thermique élevée sous irradiation (afin de transmettre au mieux l'énergie thermique produite vers le gaz caloporteur lors du fonctionnement du réacteur nucléaire).

Les céramiques, bien que répondant à ces critères, sont généralement trop fragiles pour supporter les conditions d'exploitation d'une gaine de combustible nucléaire.

Les réactions de fission au sein du combustible nucléaire génèrent en effet des produits de fission solides et gazeux qui mènent au gonflement de la gaine. Soumis à de telles contraintes, les céramiques constituant la gaine peuvent se rompre et provoquer la perte du confinement du combustible.

Afin d'éviter une telle perte, il serait dès lors intéressant d'utiliser un matériau composite à matrice céramique (CMC) de type $SiC_f/SiC$ afin de disposer de propriétés mécaniques améliorées. Un tel matériau est généralement constitué d'un arrangement bidimensionnel ou tridimensionnel de fibres de carbure de silicium (notées $SiC_f$) qui vient renforcer la matrice céramique en SiC dans laquelle elle est incorporée.

Toutefois, pour une température donnée, la conductivité thermique des CMC de type $SiC_f/SiC$ peut devenir très faible après avoir subi une irradiation.

Lors du fonctionnement d'un réacteur nucléaire « RNR-He » soumis à de hautes températures, de tels CMC s'avèrent donc inadaptés pour évacuer l'énergie thermique de la gaine de combustible nucléaire vers le gaz caloporteur.

**EXPOSE DE L'INVENTION**

Un des buts de l'invention est donc de fournir une gaine de combustible nucléaire constituée en tout ou partie d'un matériau qui, sous irradiation et à des températures comprises entre 800 °C et 1200 °C, soit capable de maintenir le combustible au sein de la gaine tout en assurant la transmission optimale de l'énergie thermique produite vers le gaz caloporteur.

L'objet de l'invention concerne ainsi une gaine de combustible nucléaire, constituée en tout ou partie d'un matériau composite à matrice céramique comprenant des fibres de carbure de silicium SiC en tant que renfort de la matrice et une couche d'interphase disposée entre la matrice et les fibres, la matrice comprenant au moins un carbure choisi parmi le carbure de titane TiC, le carbure de zirconium ZrC ou le carbure ternaire de silicium et de titane $Ti_3SiC_2$.

Comme illustré ci-après, sous irradiation et à des températures comprises entre 800 °C et 1200 °C (de préférence entre 800 °C et 1000 °C, voire égale à 800°C), la gaine de combustible nucléaire de l'invention présente une conductivité thermique permettant d'améliorer la transmission de la chaleur vers le caloporteur, et ce tout en préservant les propriétés thermomécaniques (haut point de fusion) et mécaniques (fragilité réduite) qui sont propres aux CMC et qui permettent d'assurer le confinement optimal du combustible contenu dans la gaine.

Selon un mode de réalisation préférentiel, la matrice du matériau composite à matrice céramique comprend en outre du carbure de silicium SiC. Ainsi, par exemple, le carbure de silicium SiC représente moins de 50% (typiquement de 1% à 50%) en volume de la matrice, préférentiellement moins de 25% (typiquement de 1% à 25%), encore plus préférentiellement moins de 10% (typiquement de 1% à 10%). L'ajout de ces quantités variables de SiC permet d'adapter au mieux les propriétés de la matrice (telles que la conductivité thermique) aux conditions rencontrées. L'incorporation de SiC dans la matrice permet également d'améliorer sa compatibilité thermomécanique avec les fibres de SiC : le rapprochement des coefficients de dilatation thermique permet par exemple de limiter les effets d'une dilatation différentielle entre la matrice et les fibres qui pourrait aboutir à la fissuration de la gaine de combustible nucléaire.

Dans un mode de réalisation préférentiel, le carbure de silicium SiC présent dans la matrice représente entre 5% et 15% en volume de la matrice (en particulier lorsque la matrice comprend du TiC). De façon inattendue, come cela est illustré ci-après, une telle composition de la matrice permet de bénéficier d'un optimum dans la conductivité thermique.

Optionnellement, la matrice présente une microstructure colonnaire.

Les fibres peuvent quant à elles être en tout ou partie ordonnées. Elles proviennent ainsi généralement d'une préforme fibreuse qui est le plus souvent constituée de fibres qui ne sont pas disposées de façon aléatoire mais qui sont au contraire ordonnées.

Ainsi, en particulier, les fibres peuvent se présenter sous une forme telle qu'un tissé bidimensionnel (par exemple sous forme de tresses), pseudo-bidimensionnel (par exemple un tressé qui est ensuite cousu), tridimensionnel, un tricot, des feutres.

Préférentiellement, les fibres se présentent sous la forme de tresses ou de feutres lorsque la gaine de combustible nucléaire a respectivement la forme d'un tube ou d'une plaque.

Concernant leur composition, les fibres sont constituées de SiC, ce qui les rend particulièrement adaptées au contexte de l'invention car le SiC possède une très bonne stabilité neutronique et thermique.

Une couche d'interphase est par ailleurs disposée entre les fibres et la matrice.

Cette couche peut être constituée en tout ou partie d'un composé comprenant plusieurs couches superposées, un tel composé étant préférentiellement le carbone pyrolytique. Le caractère superposé de ces couches peut être :

- du à la structure intrinsèque du composé (à savoir que ce composé présente naturellement ce type de structure, comme c'est le cas pour le carbone pyrolytique qui est nécessairement constitué de plans de graphite : une telle structure est alors dite lamellaire), ou
- obtenu à l'aide du procédé de fabrication du composé (un tel procédé étant par exemple un procédé de CVI pulsée décrit ci-après : une telle structure est alors dite multicouche).

La couche d'interphase peut présenter une épaisseur moyenne comprise entre 10 nm à 500 nm, préférentiellement 10 nm à 50 nm, encore plus préférentiellement 10 nm à 30 nm, sachant que la réduction de cette épaisseur s'accompagne le plus souvent d'une amélioration des propriétés mécaniques.

La porosité du matériau composite constituant tout ou partie de la gaine de combustible nucléaire selon l'invention est préférentiellement inférieure ou égale à 10% (voire 5%) en volume afin de favoriser une conductivité thermique élevée.

Un autre but de l'invention est de réaliser un procédé de fabrication de la gaine de combustible nucléaire selon l'invention. Ce procédé comprend l'élaboration du matériau composite selon les étapes successives suivantes :

a) on réalise une préforme fibreuse à partir des fibres,
b) on dépose par infiltration chimique en phase vapeur ladite couche d'interphase sur ladite préforme,
c) on dépose par infiltration chimique en phase vapeur ladite matrice sur ladite préforme recouverte de ladite couche d'interphase.

La préforme fibreuse a généralement une géométrie proche de celle de la gaine de combustible nucléaire que l'on cherche à fabriquer. A l'issue du procédé de fabrication de l'invention, cette gaine se présente donc le plus souvent sous sa forme définitive ou ne nécessite tout au plus que quelques opérations de rectification.

Préférentiellement, l'infiltration chimique en phase vapeur de l'étape c) est réalisée à partir d'un mélange de précurseurs comprenant i) au moins un composé choisi parmi un composé de titane, de zirconium ou de silicium, ii) un hydrocarbure et iii) de l'hydrogène.

Encore plus préférentiellement, ces précurseurs sont alors tels que :

- le composé de titane est au moins un composé choisi parmi $TiCl_4$, $TiBr_4$ ou $Ti[CH_2C(CH_3)_3]_4$,
- le composé de zirconium est au moins un composé choisi parmi $ZrCl_4$, $ZrBr_4$ ou $Zr[CH_2C(CH_3)_3]_4$,
- le composé de silicium est au moins un composé choisi parmi $SiCl_4$, $SiH_2Cl_4$ ou $CH_3SiCl_3$,
- l'hydrocarbure est au moins un composé choisi parmi $CCl_4H_2$, $CH_4$, $C_4H_{10}$ ou $C_3H_8$.

Préférentiellement, au moins une des infiltrations chimiques en phase vapeur (à savoir l'infiltration pour réaliser la couche d'interphase selon l'étape b) ou celle pour déposer la matrice selon l'étape c)) est de type pulsé.

D'autres objets, caractéristiques et avantages de l'invention apparaîtront mieux à la lecture de la description qui suit, donnée à titre illustratif et non limitatif.

**DESCRIPTION BREVE DES FIGURES**

La figure 1 représente l'évolution, en fonction de la température, de la conductivité thermique de matériaux céramiques à base de TiC et aux proportions variables de SiC.

La Figure 2 représente l'évolution, en fonction de la proportion de SiC, de la conductivité thermique à 800°C de matériaux céramiques irradiés à base de TiC.

## DESCRIPTION DE MODES DE REALISATION PARTICULIERS DE

## L'INVENTION

Les exemples qui suivent illustrent la partie du procédé de fabrication de l'invention dans laquelle on élabore le matériau composite à matrice céramique (CMC) destiné à entrer dans la composition de la gaine de combustible nucléaire.

Comme indiqué précédemment, l'utilisation d'une préforme fibreuse de forme et dimensions proches ou identiques à celles de la gaine de combustible nucléaire permet, à l'issue du procédé de fabrication de l'invention, d'obtenir cette gaine sous forme d'ébauche voire sous une forme définitive.

Ces exemples de réalisation sont suivis d'une caractérisation avant et après irradiation des propriétés thermiques de matériaux céramiques (sans fibres et couche d'interphase) représentatifs des CMC élaborés.

1 - Fabrication de matériaux composites à matrice céramique (CMC) destinés à entrer dans la composition de la gaine de combustible nucléaire de l'invention.

Les fabrications qui suivent sont réalisées à l'aide d'un procédé connu de l'homme du métier, à savoir l'infiltration chimique en phase vapeur, encore appelée CVI (Chemical Vapor Infiltration).

A l'aide de la CVI, on peut former un carbure à partir de précurseurs puis le déposer sur une préforme fibreuse. Ces précurseurs se trouvent généralement sous forme gazeuse.

Un type particulier de CVI est la CVI pulsée, telle que décrite par exemple dans les documents EP 0 385 869 ou « T. M. Besmann, Ceram. Trans., Vol. 58, pages 1-12, 1995 ».

Dans la CVI pulsée, les précurseurs sont véhiculés par une séquence d'impulsions au sein de l'enceinte réactionnelle (par exemple un four). Pour chaque impulsion, la pression des précurseurs dans le four évolue au cours du temps selon les trois phases suivantes :

- **-** phase 1 : augmentation de la pression jusqu'à la pression de travail (généralement quelques kPa) afin d'introduire les précurseurs ;
- **-** phase 2 : maintien de la pression de travail (palier au cours duquel le carbure se dépose) ;
- **-** phase 3 : diminution de la pression pour évacuer les précurseurs en excès.

### 1.1 - Fabrication d'un CMC de type SiC$_f$/TiC.

A l'aide d'un procédé de CVI, une préforme fibreuse constituée de fibres de carbure de silicium SiC ordonnées est revêtue d'une couche d'interphase d'une épaisseur moyenne de quelques dizaines à quelques centaines de nanomètres constituée d'un composé lamellaire, comme par exemple le carbone pyrolytique (PyC).

La préforme fibreuse est ensuite placée dans un four à 1050 °C aux parois chaudes et porté sous vide primaire.

Puis, par CVI pulsée, on réalise la matrice du CMC en déposant à une pression de travail de 5 kPa du carbure de titane TiC par réaction en phase vapeur à partir des précurseurs gazeux TiCl$_4$, CH$_4$ et H$_2$ initialement contenus dans une cuve de mélange à une pression de 40 kPa.

Afin d'obtenir le dépôt de carbure le plus homogène en termes de composition et de microstructure, il est préférable de limiter la vitesse de dépôt en travaillant à basse température (typiquement comprise entre 900°C et 1200°C) et à basse pression de travail (typiquement comprise entre 1 kPa et 10 kPa).

Il est à noter que des paramètres autres que la température et la pression peuvent également influer sur l'homogénéité du dépôt de carbure. Il s'agit notamment de la nature de l'hydrocarbure, de la proportion de carbone et du facteur de dilution.

Ainsi, par exemple, pour un dépôt de TiC :

- **-** la proportion de carbone m$^{C/Ti}$ correspondant au rapport entre le nombre d'atomes de carbone et le nombre d'atomes de titane dans le mélange gazeux de précurseurs, bien qu'elle varie en fonction de l'hydrocarbure utilisé, doit généralement être comprise entre 1 et 18 ;
- **-** le facteur de dilution $\alpha$ correspondant au rapport entre la concentration totale des précurseurs et la concentration de TiCl$_4$ exprimées en moles/litre (soit $\alpha =($ [TiCl$_4$]+[CH$_4$]+[H$_2$])/[TiCl$_4$]) doit généralement être compris entre 15 et 100.

Le débit des gaz vecteurs CH$_4$ mais surtout H$_2$ et le contrôle de la température d'ébullition de TiCl$_4$ permettent de contrôler le débit de TiCl$_4$ et donc le facteur de dilution α et la proportion de carbone m$^{C/Ti}$.

La pression dans le four dépend également de ce débit ainsi que du temps d'ouverture des vannes.

Dans le cas présent, les paramètres de dépôt sont les suivants :

- débit moyen des gaz vecteurs = 30 litres / heure
- temps d'ouverture des vannes (phase 1) = 0,2 à 0,3 s
- temps de résidence (phase 2) = 4 à 5 s
- temps de pompage (phase 3) = 1 s
- épaisseur déposée pour une impulsion = 1,5 nm
- α = 50
- m$^{C/Ti}$ = 9
- vitesse de dépôt = environ 1 μm/h

Ceci a permis d'obtenir un CMC de type SiC$_f$/TiC dans lequel la matrice est constituée de TiC stoechiométrique et présente une microstructure colonnaire et une épaisseur moyenne de 40 μm.

1.2 - <u>Fabrication d'un CMC de type SiC$_f$/ZrC.</u>

Des conditions opératoires similaires à celles décrites dans l'exemple précédent peuvent être mises en oeuvre pour réaliser un CMC dans lequel la matrice est composée de carbure de zirconium ZrC. Les seuls paramètres spécifiques sont alors les suivants :

- ZrCl$_4$, C$_3$H$_6$, gaz H$_2$ et Ar en quantité équivalente / 1600°C / m$^{C/Zr}$ = 0,5 (vitesse de dépôt inférieure à 14 μm/h); ou
- ZrBr$_4$, CH$_4$, H$_2$, Ar / 1000 °C à 1500°C / 1 à 10 kPa

1.3 - <u>Fabrication d'un CMC de type SiC$_f$/TiC-SiC.</u>

On réalise maintenant des CMC dans lesquels la matrice est de composition mixte, à savoir qu'elle est composée à la fois de carbure de titane TiC et de carbure de silicium SiC.

La CVI pulsée est particulièrement adaptée à la fabrication des matrices mixtes puisqu'elle permet de varier aisément la proportion entre le TiC et le SiC en modifiant par exemple le nombre d'impulsions relatives aux précurseurs de chacun de ces carbures. Ceci a été mis à profit pour réaliser trois CMC mixtes SiC$_f$/TiC-SiC dans lesquels la matrice présentait les compositions TiC/SiC en pourcentage volumique suivantes : 90/10, 75/25, 50/50.

Plusieurs modes de dépôt par CVI pulsée sont envisageables.

Dans un premier mode de réalisation, le nombre d'impulsions au sein de chacune des séquences de dépôt de TiC et SiC est réduit afin que la couche déposée soit discontinue.

Les conditions de dépôt de TiC sont celles indiqués dans l'exemple précédent.

Pour le dépôt de SiC, les conditions sont également similaires à celles du dépôt de TiC, si ce n'est pour les paramètres suivants :

- précurseurs gazeux : H$_2$ et MTS (méthyltrichlorosilane de formule CH$_3$SiCl$_3$)
- température de 900°C à 1050°C
- pression de travail 1,5 kPa à 5 kPa
- α$_{SiC}$ (P$_{H2}$/P$_{MTS}$) de ¼ à 5 (de ¼ à ½, on observe la formation de carbone résiduel, à partir de 3, il n'y a plus de carbone résiduel. En revanche la vitesse de dépôt augmente avec α$_{SiC}$).

Il est à noter que la vitesse de dépôt de la couche de SiC est proportionnelle aux valeurs de température et pression indiquées.

Dans le cas présent, les paramètres effectivement utilisés pour le dépôt de SiC sont les suivants :

- température = 1050 °C
- pression de travail = 4 kPa
- α$_{SiC}$ (P$_{H2}$/P$_{MTS}$) = 0,5
- épaisseur moyenne déposée par impulsion = 3 nm
- vitesse de dépôt = environ 0,3 à 1 μm/h

La structure de la séquence d'impulsions est la suivante : 2 impulsions pour le dépôt de TiC suivies d'une impulsion pour le dépôt de SiC.

La matrice mixte obtenue est constituée de SiC et de TiC stoechiométrique et présente une épaisseur moyenne de 40 $\mu$m.

Dans un deuxième mode de réalisation, on réalise des dépôts nano-séquencés, à savoir des dépôts pour lesquels des couches de nature différentes d'une épaisseur moyenne de 10 à 100 nm sont successivement déposées. Pour cela, on fait se succéder les impulsions des précurseurs propres au TiC et au SiC (par exemple 40 impulsions pour SiC et 80 impulsions pour TiC, ou encore 20 impulsions pour SiC et 40 impulsions pour TiC).

Dans un troisième mode de réalisation, on introduit simultanément les précurseurs du SiC et du TiC. Généralement, les précurseurs et les conditions opératoires sont alors choisis parmi les suivants :

- $TiCl_4$, $SiCl_4$, $CCl_4H_2$ / 950°C à 1150°C / 100 kPa
- $TiCl_4$, $SiCl_4$, $C_3H_8$, $H_2$ / 950°C à 1150°C / 4-40 kPa
- $TiCl_4$, $SiCl_4$, $CH_4$, $H_2$ / 950°C à 1150°C / 7 kPa
- $TiCl_4$, $SiH_2Cl_2$, $C_4H_{10}$, $H_2$ / 950°C à 1150°C / 100 kPa
- $TiCl_4$, $CH_3SiCl_3$, $H_2$ / 950°C à 1150°C / 1 kPa à 100 kPa
- $TiCl_4$, $SiCl_4$, $C_3H_8$, $H_2$ / 950°C à 1150°C / 100 kPa

2 - <u>Propriétés thermiques des matériaux composites à matrice céramique (CMC) comprenant du TiC.</u>

Des matériaux céramiques (sans fibres et couche d'interphase) ayant la même composition que la matrice des quatre CMC à base de TiC réalisés précédemment sont fabriqués par frittage sous pression.

Les quatre matériaux céramiques présentent les compositions TiC/SiC suivantes en pourcentage volumique : 100/0, 90/10, 75/25, 50/50.

Ces matériaux céramiques permettent de déterminer la conductivité thermique relative des quatre CMC à base de TiC réalisés précédemment car, même si la valeur absolue de leur conductivité thermique diffère de celle des CMC correspondants, leur valeur relative est comparable. En d'autres termes, le comportement de la conductivité thermique de ces matériaux céramiques les uns par rapport aux autres est similaire et représentatif du comportement des quatre CMC réalisés précédemment.

En pratique, la diffusivité thermique des matériaux céramiques est mesurée pour différentes températures.

Connaissant la densité et la capacité calorifique massique (noté Cp) de ces matériaux céramiques, la conductivité thermique est ensuite calculée selon la formule k = $\alpha.\rho.Cp$, dans laquelle :

- k est la conductivité thermique ($W.m^{-1}.K^{-1}$)
- $\alpha$ est la diffusivité thermique ($m^2.s^{-1}$)
- p est la masse volumique ($kg.m^{-3}$)
- Cp est la capacité calorifique massique ($J.kg^{-1}.K^{-1}$).

Les expressions des Cp(T) de TiC et de SiC utilisées sont les suivantes :

$$C_p(SiC) = 925,65 + 0,3772T - 7,9259 \times 10^{-5}T^2 - \frac{3,1946 \times 10^7}{T^2}$$

(avec T en K)

$$C_p(TiC) = 0,7415 + 0,00114T - 1,57655 \times 10^{-6}T^2 + 1,14714 \times 10^{-10}T^3 + 7,05467 \times 10^{-13}T^4$$

(avec T en K)

Lorsque le matériau céramique est de composition mixte (par exemple 75% TiC + 25% SiC), sa capacité calorifique massique est la moyenne pondérée de la capacité calorifique massique de chaque carbure.

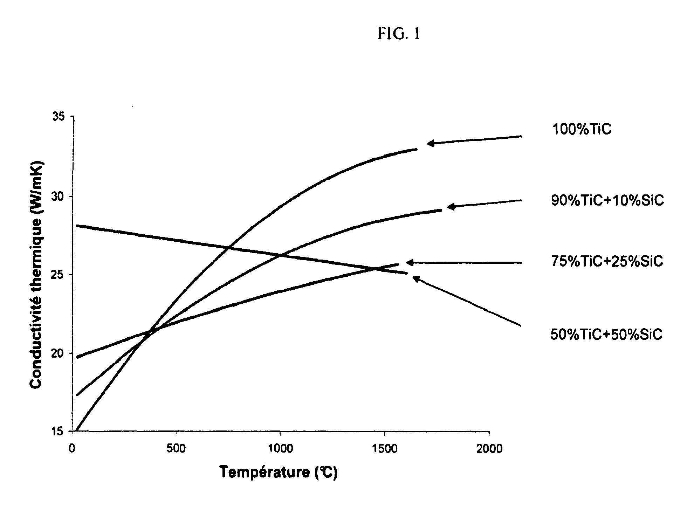

Après calcul, on obtient alors l'évolution de la conductivité thermique (courbes de tendance) en fonction de la température, telle qu'elle est représentée sur la Figure 1.

Il peut être déduit de la Figure 1 que l'ajout d'une quantité croissante de carbure de titane TiC dans la matrice d'un CMC de type SiC$_f$/TiC-SiC non irradié permet de faire croître la conductivité thermique de ce CMC malgré l'élévation de température, en particulier pour des températures comprises entre 800 °C et 1200 °C et des teneurs en TiC supérieures à 50%.

Les mesures de conductivité thermique ci-après ont confirmé un tel comportement des matériaux céramiques après irradiation.

Ces mesures ont été menées selon le même protocole sur cinq matériaux céramiques irradiés, à savoir les quatre matériaux céramiques précédents et un matériau céramique constitué de 100% SiC (soit les matériaux céramiques à la composition TiC/SiC volumique suivante : 100/0, 90/10, 75/25, 50/50, 0/100).

L'irradiation a consisté à simuler un flux neutronique par l'implantation d'ions Kr d'une énergie de 74 MeV afin d'atteindre une dose d'irradiation de 1 dpa (déplacement par atome) permettant de créer deux zones de dommage, celle des interactions nucléaires (simulant un dommage neutronique) et celle des interactions électroniques. La conductivité thermique a été mesurée à 800°C dans la zone des interactions nucléaires.

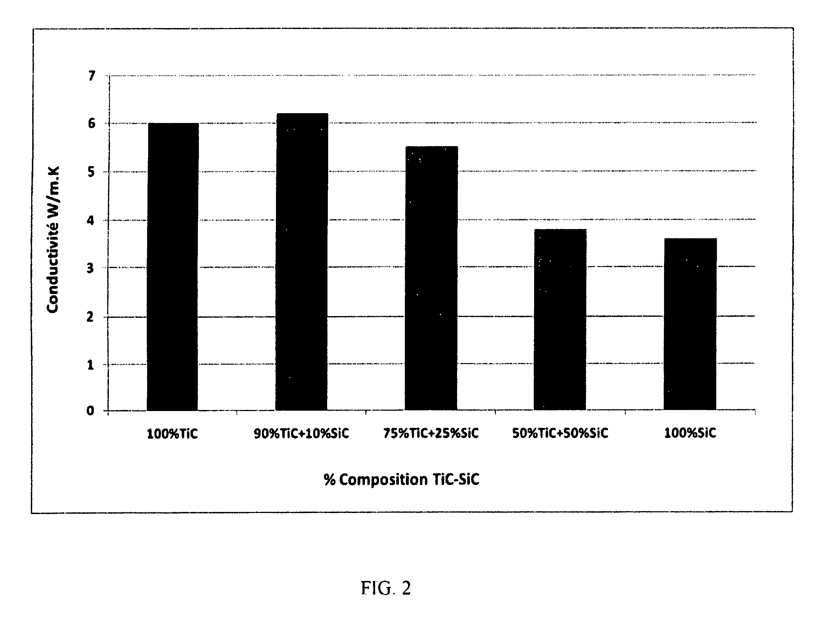

Les résultats sont regroupés sur la Figure 2. Ils montrent que la conductivité thermique à 800°C de matériaux céramiques irradiés composés de TiC et SiC est améliorée lorsque la proportion de TiC augmente. Le matériau céramique de composition volumique 90% TiC + 10% SiC (typiquement un matériau comprenant en volume de 95% à 85% de TiC et le reste de SiC) présente même un optimum de conductivité thermique.

Des résultats complémentaires ont également montré, qu'après une irradiation par des ions Au (4 MeV, 8 dpa), la conductivité thermique à 800°C d'un matériau céramique constitué de TiC était supérieure à celle d'un matériau céramique constitué de SiC.

Il apparaît donc que, pour fabriquer une gaine de combustible nucléaire, l'utilisation d'un matériau composite à matrice céramique comprenant des fibres de SiC, une couche d'interphase et une matrice comprenant au moins un carbure choisi parmi le carbure de titane TiC, le carbure de zirconium ZrC ou le carbure ternaire de silicium et de titane Ti$_3$SiC$_2$, permet d'améliorer la conductivité thermique de cette gaine sous irradiation à des températures généralement comprises entre 800 °C et 1200 °C.

Lors du fonctionnement d'un réacteur de type « RNR-He », la gaine de combustible nucléaire de l'invention peut ainsi maintenir mécaniquement le combustible nucléaire et assurer une transmission de la chaleur vers le gaz caloporteur qui est plus efficace que celle réalisée par une gaine constituée d'un CMC de type SiC$_f$/SiC.

**Revendications**

1. Gaine de combustible nucléaire, constituée en tout ou partie d'un matériau composite à matrice céramique comprenant des fibres de carbure de silicium SiC en tant que renfort de ladite matrice et une couche d'interphase disposée entre ladite matrice et lesdites fibres, ladite matrice comprenant au moins un carbure choisi parmi le carbure de titane TiC, le carbure de zirconium ZrC ou le carbure ternaire de silicium et de titane Ti$_3$SiC$_2$.

2. Gaine de combustible nucléaire selon la revendication 1, dans laquelle ladite matrice comprend en outre du carbure de silicium SiC.

3. Gaine de combustible nucléaire selon la revendication 2, dans laquelle ledit carbure de silicium SiC représente moins de 25% en volume de ladite matrice.

4. Gaine de combustible nucléaire selon la revendication 3, dans laquelle ledit carbure de silicium SiC représente moins de 10% en volume de ladite matrice.

5. Gaine de combustible nucléaire selon la revendication 3, dans laquelle ledit carbure de silicium SiC représente entre 5% et 15% en volume de ladite matrice.

6. Gaine de combustible nucléaire selon l'une quelconque des revendications précédentes, dans laquelle ladite matrice présente une microstructure colonnaire.

7. Gaine de combustible nucléaire selon l'une quelconque des revendications précédentes, dans laquelle lesdites fibres sont en tout ou partie ordonnées.

8. Gaine de combustible nucléaire selon l'une quelconque des revendications précédentes, dans laquelle ladite couche d'interphase est constituée en tout ou partie d'un composé comprenant plusieurs couches superposées.

9. Gaine de combustible nucléaire selon l'une quelconque des revendications précédentes, dans laquelle ladite couche d'interphase présente une épaisseur moyenne comprise entre 10 nm à 500 nm.

10. Gaine de combustible nucléaire selon l'une quelconque des revendications précédentes, dans laquelle ledit matériau composite présente une porosité inférieure ou égale à 10% en volume.

11. Procédé de fabrication d'une gaine de combustible nucléaire telle que définie dans l'une quelconque des revendications 1 à 10, comprenant l'élaboration dudit matériau composite selon les étapes successives suivantes :

    a) on réalise une préforme fibreuse à partir desdites fibres,
    b) on dépose par infiltration chimique en phase vapeur ladite couche d'interphase sur ladite préforme,
    c) on dépose par infiltration chimique en phase vapeur ladite matrice sur ladite préforme recouverte de ladite couche d'interphase.

12. Procédé de fabrication selon la revendication 11, dans lequel ladite infiltration chimique en phase vapeur de l'étape c) est réalisée à partir d'un mélange de précurseurs comprenant i) au moins un composé choisi parmi un composé de titane, de zirconium ou de silicium, ii) un hydrocarbure et iii) de l'hydrogène.

13. Procédé de fabrication selon la revendication 12, dans lequel :

    - ledit composé de titane est au moins un composé choisi parmi $TiCl_4$, $TiBr_4$ ou $Ti[CH_2C(CH_3)_3]_4$,
    - ledit composé de zirconium est au moins un composé choisi parmi que $ZrCl_4$, $ZrBr_4$ ou $Zr[CH_2C(CH_3)_3]_4$,
    - ledit composé de silicium est au moins un composé choisi parmi $SiCl_4$, $SiH_2Cl_4$ ou $CH_3SiCl_3$.

14. Procédé de fabrication selon la revendication 12 ou 13, dans lequel ledit hydrocarbure est au moins un composé choisi parmi $CCl_4H_2$, $CH_4$, $C_4H_{10}$ ou $C_3H_8$.

15. Procédé de fabrication selon l'une quelconque des revendications 11 à 14, dans lequel au moins une desdites infiltrations chimiques en phase vapeur est de type pulsé.

**Claims**

1. A nuclear fuel cladding totally or partially made of a ceramic matrix composite material comprising silicon carbide SiC, fibers as a reinforcement for said matrix and an interphase layer provided between said matrix and said fibers, said matrix comprising at least one carbide selected from titanium carbide TiC, zirconium carbide ZrC, or ternary titanium silicon carbide $Ti_3SiC_2$.

2. The nuclear fuel cladding according to claim 1, wherein said matrix further comprises silicon carbide SiC.

3. The nuclear fuel cladding according to claim 2, wherein said silicon carbide SiC represents less than 25% by volume of said matrix.

4. The nuclear fuel cladding according to claim 3, wherein said silicon carbide SiC represents less than 10% by volume of said matrix.

5. The nuclear fuel cladding according to claim 3, wherein said silicon carbide SiC represents between 5% and 15% by volume of said matrix.

6. The nuclear fuel cladding according to any one of the preceding claims, wherein said matrix has a columnar microstructure.

7. The nuclear fuel cladding according to any one of the preceding claims, wherein said fibers are totally or partially ordered.

8. The nuclear fuel cladding according to any one of the preceding claims, wherein said interphase layer is totally or partially made of a compound comprising several superimposed layers.

9. The nuclear fuel cladding according to any one of the preceding claims, wherein said interphase layer has a mean thickness in the range between 10 nm and 500 nm.

10. The nuclear fuel cladding according to any one of the preceding claims, wherein said composite material has a porosity of 10% by volume or less.

11. A process for manufacturing a nuclear fuel cladding as defined in any one of claims 1 to 10, which comprises the preparation of said composite material according to the following consecutive steps:

   a) making a fiber pre-form from said fibers,
   b) depositing said interphase layer by chemical vapor infiltration onto said pre-form,
   c) depositing said matrix by chemical vapor infiltration onto said pre-form coated with said interphase layer.

12. The manufacturing process according to claim 11, wherein said chemical vapor infiltration of step c) is performed using a mixture of precursors comprising i) at least one compound selected from a titanium-, zirconium- or silicon-based compound, ii) a hydrocarbon and iii) hydrogen.

13. The manufacturing process according to claim 12, wherein:

   - said titanium compound is at least one compound selected from $TiCl_4$, $TiBr_4$ or $Ti[CH_2C(CH_3)_3]_4$,
   - said zirconium compound is at least one compound selected from $ZrCl_4$, $ZrBr_4$ or $Zr[CH_2C(CH_3)_3]_4$,
   - said silicon compound is at least one compound selected from $SiCl_4$, $SiH_2Cl_4$ or $CH_3SiCl_3$.

14. The manufacturing process according to claim 12 or 13, wherein said hydrocarbon is at least one compound selected from $CCl_4H_2$, $CH_4$, $C_4H_{10}$ or $C_3H_8$.

15. The manufacturing process according to any one of claims 11 to 14, wherein at least one of said chemical vapor infiltrations is of the pulsed type.


**Patentansprüche**

1. Kernbrennstoffhülle, die ganz oder teilweise von einem Verbundmaterial mit keramischer Matrix gebildet wird, das Fasern aus Siliziumkarbid SiC als Verstärkung der Matrix umfasst und eine Interphasenschicht, die zwischen der Matrix und den Fasern angeordnet ist, wobei die Matrix mindestens ein Karbid umfasst, das aus dem Titankarbid TiC, dem Zirkonkarbid ZrC oder dem ternären Titansiliziumkarbid $Ti_3SiC_2$ ausgewählt ist.

2. Kernbrennstoffhülle nach Anspruch 1, wobei die Matrix weiterhin Siliziumkarbid SiC umfasst.

3. Kernbrennstoffhülle nach Anspruch 2, wobei das Siliziumkarbid SiC weniger als 25 Volumenprozent der Matrix darstellt.

4. Kernbrennstoffhülle nach Anspruch 3, wobei das Siliziumkarbid SiC weniger als 10 Volumenprozent der Matrix darstellt.

5. Kernbrennstoffhülle nach Anspruch 3, wobei das Siliziumkarbid SiC zwischen 5 und 15 Volumenprozent der Matrix darstellt.

6. Kernbrennstoffhülle nach einem der vorangehenden Ansprüche, wobei die Matrix eine säulenförmige Mikrostruktur aufweist.

7. Kernbrennstoffhülle nach einem der vorangehenden Ansprüche, wobei die Fasern ganz oder teilweise geordnet sind.

8. Kernbrennstoffhülle nach einem der vorangehenden Ansprüche, wobei die Interphasenschicht ganz oder teilweise von einem Verbund gebildet wird, der mehrere übereinanderliegende Schichten umfasst.

9. Kernbrennstoffhülle nach einem der vorangehenden Ansprüche, wobei die Interphasenschicht eine durchschnittliche Dicke zwischen 10 nm bis 500 nm inklusive aufweist.

**10.** Kernbrennstoffhülle nach einem der vorangehenden Ansprüche, wobei das Verbundmaterial eine Porosität von unter oder gleich 10 Volumenprozent aufweist.

**11.** Verfahren zur Herstellung einer Kernbrennstoffhülle, so wie in einem der Ansprüche 1 bis 10 definiert, der die Produktion des Verbundmaterials nach einem der folgenden aufeinanderfolgenden Schritte umfasst:

a) Herstellen einer fasrigen Vorform aus den Fasern,
b) Aufbringen der Interphasenschicht auf der Vorform durch chemische Infiltration in der Gasphase,
c) Aufbringen der Matrix auf der von der Interphasenschicht bedeckten Vorform durch chemische Infiltration in der Gasphase.

**12.** Herstellungsverfahren nach Anspruch 11, wobei die chemische Infiltration in der Gasphase von Schnitt c) mit einem Vorläufergemisch durchgeführt wird, das i) mindestens eine Verbindung, die aus einer Titan-, Zirkonium- oder Siliziumverbindung ausgewählt ist, ii) einen Kohlenwasserstoff und iii) Wasserstoff umfasst.

**13.** Herstellungsverfahren nach Anspruch 12, wobei:

- die Titanverbindung mindestens eine Verbindung ist, die aus $TiCl_4$, $TiBr_4$ ou $Ti[CH_2C(CH_3)_3]_4$ ausgewählt ist,
- die Zirkoniumverbindung mindestens eine Verbindung ist, die aus $ZrCl_4$, $ZrB_4$ oder $Zr[CH_2C(CH_3)_3]_4$ ausgewählt ist,
- die Siliziumverbindung mindestens eine Verbindung ist, die aus $SiCl_4$, $SiH_2Cl_4$ oder $CH_3SiCl_3$ ausgewählt ist.

**14.** Herstellungsverfahren nach Anspruch 12 oder 13, wobei der Kohlenwasserstoff mindestens eine Verbindung ist, die aus $CCl_4H_2$, $CH_4$, $C_4H_{10}$ oder $C_3H_8$ ausgewählt ist.

**15.** Herstellungsverfahren nach einem der Ansprüche 11 bis 14, wobei mindestens eine der chemischen Infiltrationen in der Gasphase gepulsten Typs ist.

FIG. 1

FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1913600 A

- EP 0385869 A

**Littérature non-brevet citée dans la description**

- **T. M. BESMANN.** *Ceram. Trans.,* 1995, vol. 58, 1-12